# EUROPEAN PATENT APPLICATION

(11) **EP 4 528 756 A1**
(43) Date of publication of application: **26.03.2025**
(21) Application number: 23807476.9
(22) Date of filing: 08.05.2023
(51) Int. Cl.: H01B 13/00, C01D 15/00, H01M 10/0562

(54) **METHOD AND APPARATUS FOR PRODUCING SULFIDE SOLID ELECTROLYTE**

(30) Priority: 18.05.2022 JP 2022081848
(71) Applicant: AGC INC., Chiyoda-ku, Tokyo 1008405 (JP)
(72) Inventor: OMORI, Norifumi, Tokyo 100-8405 (JP)
(74) Representative: Müller-Boré & Partner Patentanwälte PartG mbB
(86) International application number: PCT/JP2023/017336
(87) International publication number: WO 2023/223872

(57) **Abstract**

The present invention relates to a method for producing a sulfide solid electrolyte, in the method a starting material being heated and melted in a heating furnace which is provided with a sulfur supply unit, a partition unit that is provided within the heating furnace, and one or more other structures that are capable of bringing the inside and the outside of the heating furnace into communication with each other. With respect to this method for producing a sulfide solid electrolyte, a melt is formed by heating and melting the starting material; the void space between the melt and the heating furnace is divided, by means of the partition unit, into a first space in which the sulfur supply unit is arranged and a second space in which the other structures are arranged; and a sulfur excessive atmosphere part is formed by introducing a component that contains elemental sulfur into the first space from the sulfur supply unit.

## Description

### TECHNICAL FIELD

The present invention relates to a method for producing a sulfide-based solid electrolyte and an apparatus for producing the same.

### BACKGROUND ART

Lithium-ion secondary batteries are widely used in portable electronic devices such as mobile phones and laptop computers.

In the related art, a liquid electrolyte has been used in a lithium-ion secondary battery, but there is a concern of liquid leakage, ignition, and the like, and it has been necessary to increase the size of a case for safety design. It has also been desired to improve the shortage of battery life and the narrow operating temperature range.

In this regard, attention has been paid to an all-solid-state lithium-ion secondary battery in which a solid electrolyte is used as an electrolyte of a lithium-ion secondary battery, from the viewpoint of improving safety, charging and discharging at a high speed, and reducing the size of the case.

The solid electrolytes are roughly classified into sulfide-based solid electrolytes and oxide-based solid electrolytes. Sulfide ions constituting the sulfide-based solid electrolytes have higher polarizability and higher ion conductivity than those of oxide ions constituting the oxide-based solid electrolytes. Examples of the sulfide-based solid electrolytes include sulfide-based solid electrolytes containing lithium element, sulfur element, and phosphorus element, and known methods for producing such solid electrolytes include a sealed glass tube method, a mechanical milling method, and a melting method.

Among these methods, the melting method is a method in which a raw material is heated and melted to synthesize a sulfide-based solid electrolyte. In the melting method, a sulfur component is likely to volatilize during heating and melting, and composition control can be relatively difficult.

On the other hand, Patent Literature 1 describes that Li₂S and SiS₂ which are constituent compounds of the sulfide-based lithium-ion conductive solid electrolyte are mixed in a predetermined stoichiometric mixture ratio, and then a sulfur powder or a sulfur gas is added to the mixture, and the mixture is heated and melted in the presence of excess sulfur. Further, it is also described that such a method can prevent an amount of sulfur in each of the constituent compounds from becoming insufficient due to generation of sulfur dioxide or hydrogen sulfide.

### CITATION LIST

### PATENT LITERATURE

Patent Literature 1: JPH06-115911A

### SUMMARY OF INVENTION

### TECHNICAL PROBLEM

However, when heating and melting are performed in a gas atmosphere containing a sulfur element, if there are parts in a heating furnace where a temperature is likely to drop, such as a raw material charge portion or a piping connection portion, sulfur contained in the gas is likely to liquefy or solidify in parts having a relatively low temperature and adheres to those parts. Further, if sulfur adheres to the parts, blockages may occur in the apparatus, making continuous production difficult. Thus, when the heating and melting are performed in the gas atmosphere containing the sulfur element, there is room for improvement in terms of productivity.

Therefore, an object of the present invention is to provide a production method for a sulfide-based solid electrolyte and a production apparatus, which is excellent in productivity and in which adhesion of sulfur to an inside of the apparatus is prevented.

### SOLUTION TO PROBLEM

As a result of intensive studies, the present inventors have found that in a method for producing a sulfide-based solid electrolyte in which heating and melting are performed in a gas atmosphere containing a sulfur element and an apparatus for producing the same, the above problem can be solved by separating a sulfur-excess atmosphere portion from a location in a heating furnace where adhesion of sulfur is likely to occur, and have completed the present invention.

That is, the present invention relates to the following 1 to 11.
1. A method for producing a sulfide-based solid electrolyte, the method including heating and melting a raw material in a heating furnace,
   in which the heating furnace includes a sulfur supply portion, a partition provided inside the heating furnace, and one or more other structures capable of allowing an inside and an outside of the heating furnace to communicate with each other, and
   the method includes:
      forming a melt by heating and melting the raw material;
      dividing a space between the melt and the heating furnace by the partition into a first space in which the sulfur supply portion is located and a second space in which the other structure is located; and
      forming a sulfur-excess atmosphere portion by introducing a component containing a sulfur element into the first space from the sulfur supply portion.
2. The method for producing a sulfide-based solid electrolyte according to the 1, in which the other structure is at least one of a raw material charge portion and a sulfide-based solid electrolyte discharge portion.
3. The method for producing a sulfide-based solid electrolyte according to the 1 or 2, in which a minimum temperature of the second space is 450°C or lower.
4. The method for producing a sulfide-based solid electrolyte according to the 1 or 2, the method further including allowing the inside and the outside of the heating furnace to communicate with each other by at least one of the other structures in a state where the sulfur-excess atmosphere portion is provided in the heating furnace,
   in which the second space includes the other structure that allows the inside and the outside of the heating furnace to communicate with each other.
5. The method for producing a sulfide-based solid electrolyte according to the 1 or 2, the method further including heating a sulfur source at 200°C to 450°C outside the heating furnace to obtain a gas containing a sulfur element,
   in which the gas containing the sulfur element is introduced from the sulfur supply portion as the component containing the sulfur element.
6. The method for producing a sulfide-based solid electrolyte according to the 1 or 2, in which a solid containing a sulfur element is introduced from the sulfur supply portion as the component containing the sulfur element.
7. The method for producing a sulfide-based solid electrolyte according to the 1 or 2, in which a heating temperature in the heating and melting is 600°C to 900°C.
8. The method for producing a sulfide-based solid electrolyte according to the 1 or 2, in which a moisture dew point of a gas atmosphere portion separated from the first space is lower than -30°C in the heating furnace.
9. The method for producing a sulfide-based solid electrolyte according to the 1 or 2, in which an oxygen concentration of a gas atmosphere portion separated from the first space is less than 100 ppm in the heating furnace.
10. An apparatus for producing a sulfide-based solid electrolyte, the apparatus including a heating furnace configured to heat and melt a raw material,
   in which the heating furnace includes a sulfur supply portion, a partition provided inside the heating furnace, and one or more other structures capable of allowing an inside and an outside of the heating furnace to communicate with each other,
   the partition separates a space between a melt formed by heating and melting the raw material in the heating furnace and the heating furnace into a first space in which the sulfur supply portion is located and a second space in which the other structure is located, and
   the sulfur supply portion forms a sulfur-excess atmosphere portion by introducing a component containing a sulfur element into the first space.
11. The apparatus for producing a sulfide-based solid electrolyte according to the 10, in which the other structure is at least one of a raw material charge portion and a sulfide-based solid electrolyte discharge portion.

### ADVANTAGEOUS EFFECTS OF INVENTION

According to the present invention, it is possible to provide a method for producing a sulfide-based solid electrolyte and an apparatus for producing the same, which is excellent in productivity and in which adhesion of sulfur to an inside of the apparatus is prevented.

### BRIEF DESCRIPTION OF DRAWINGS

FIG. 1 is a flowchart illustrating a production method according to an embodiment of the present invention.
FIGS. 2A and 2B are diagrams schematically illustrating the production method according to the embodiment of the present invention. FIG. 2A is a diagram illustrating a production method in which a raw material charge portion is provided as another structure, and FIG. 2B is a diagram illustrating a production method in which a sulfide-based solid electrolyte discharge portion is provided as another structure.
FIG. 3 is a flowchart illustrating a production method according to an embodiment of the present invention.
FIG. 4 is a diagram schematically illustrating the production method according to the embodiment of the present invention.
FIGS. 5A and 5B are flowcharts illustrating the production method according to the embodiment of the present invention. FIG. 5A is a flowchart illustrating a case where a gas containing a sulfur element is introduced into a first space, and FIG. 5B is a flowchart illustrating a case where a solid containing a sulfur element is introduced into the first space.

### DESCRIPTION OF EMBODIMENTS

Hereinafter, the present invention is described in detail, but the present invention is not limited to the following embodiment and can be freely modified and implemented without departing from the gist of the present invention. In addition, "to" indicating a numerical range is used to include numerical values written before and after it as a lower limit value and an upper limit value. In the following drawings, members and portions having the same functions may be denoted by the same reference numerals, and duplicate descriptions may be omitted or simplified. In addition, embodiments described in the drawings are schematically for the purpose of clearly illustrating the present invention, and do not necessarily accurately represent a size or a scale of an actual apparatus.

### <Method for Producing Sulfide-based Solid Electrolyte>

A method for producing a sulfide-based solid electrolyte according to the present embodiment (hereinafter also referred to as the present production method) is a method for producing a sulfide-based solid electrolyte including heating and melting a raw material in a heating furnace. In the present production method, the heating furnace includes a sulfur supply portion, a partition provided inside the heating furnace, and one or more other structures capable of allowing an inside and an outside of the heating furnace to communicate with each other. In the present production method, a melt is formed by heating and melting the raw material, a space between the melt and the heating furnace is divided by the partition into a first space in which the sulfur supply portion is located and a second space in which the other structure is located, and a sulfur-excess atmosphere portion is formed by introducing a component containing a sulfur element into the first space from the sulfur supply portion.

### (Sulfide-based Solid Electrolyte)

In the present production method, type and composition of the produced sulfide-based solid electrolyte are not particularly limited, and can be appropriately selected depending on application, desired physical properties, and the like. Examples of the sulfide-based solid electrolyte include a sulfide-based solid electrolyte containing Li, P, and S, and a sulfide-based solid electrolyte containing Li, P, S, and Ha. Here, Ha represents at least one element selected from halogen elements. Specifically, Ha is, for example, at least one element selected from the group consisting of F, Cl, Br, and I. In order to obtain an argyrodite crystal structure, Ha more preferably includes at least one of Cl and Br, still more preferably includes Cl, and yet still more preferably elemental Cl or a mixture of Cl and Br.

Depending on the purpose, the sulfide-based solid electrolyte may be an amorphous sulfide-based solid electrolyte, a sulfide-based solid electrolyte having a specific crystal structure, or a sulfide-based solid electrolyte including a crystal phase and an amorphous phase.

The sulfide-based solid electrolyte preferably includes a crystal structure from the viewpoint of improving lithium-ion conductivity. In the case where the sulfide-based solid electrolyte contains a crystal structure, a crystal contained in the sulfide-based solid electrolyte is preferably an ion-conductive crystal. Specifically, the ion-conductive crystal is a crystal having lithium-ion conductivity of preferably more than 10⁻⁴ S/cm, and more preferably more than 10⁻³ S/cm.

More specifically, examples of the sulfide-based solid electrolyte include a sulfide-based solid electrolyte containing an LGPS crystal such as Li₁₀GeP₂S₁₂, a sulfide-based solid electrolyte containing an argyrodite crystal such as Li₆PS₅Cl₁, Li-P-S-Ha-based crystallized glass, and LPS crystallized glass such as Li₇P₃S₁₁. The sulfide-based solid electrolyte may be a combination of these, or may contain a plurality of types of crystals having different compositions or crystal structures. From the viewpoint of excellent lithium-ion conductivity, a sulfide-based solid electrolyte containing an argyrodite crystal is preferable as the sulfide-based solid electrolyte.

When the sulfide-based solid electrolyte contains crystals, the crystal structure thereof preferably contains an argyrodite type from the viewpoint of symmetry of the crystal structure. Highly symmetric crystals tend to allow lithium-ion conduction paths to extend in three dimensions, which is favorable when a powder is formed.

In order to obtain the argyrodite crystal structure, the crystal phase includes Ha in addition to Li, P, and S. Ha more preferably contains at least one of Cl and Br, still more preferably contains Cl, and is yet still more preferably elemental Cl or the mixture of Cl and Br.

The argyrodite crystal can be defined as including Li, P, S, and Ha, and having peaks at positions of 2θ = 15.7 ± 0.5° and 30.2 ± 0.5° in an X-ray powder diffraction (XRD) pattern. In addition to the above peaks, the XRD pattern preferably has a peak at a position of 2θ = 18.0 ± 0.5°, and more preferably has a peak at a position of 2θ = 25.7 ± 0.5°.

A composition of the sulfide-based solid electrolyte is determined by composition analysis using ICP emission spectrometry, atomic absorption, ion chromatography, or the like. A type of the crystal included in the sulfide-based solid electrolyte can be analyzed from an X-ray powder diffraction (XRD) pattern.

### (Raw Material)

The raw material used in the present production method can be any of the above-mentioned various known raw materials for sulfide-based solid electrolytes. For example, when the sulfide-based solid electrolyte contains Li, P, and S, the raw material contains lithium element (Li), sulfur element (S), and phosphorus element (P). As such a raw material, Li-containing substances (components), such as elemental Li or Li-containing compounds, S-containing substances (components), such as elemental S or S-containing compounds, P-containing substances (components), such as elemental P or P-containing compounds, and the like can be used in appropriate combination. The Li-containing compound, the S-containing compound, and the P-containing compound may be a compound containing two or more elements selected from Li, S, and P. For example, phosphorus pentasulfide (P₂S₅) may be used as a compound serving as both the S-containing compound and the P-containing compound.

Examples of the Li-containing substances include lithium compounds such as lithium sulfide (Li₂S), lithium carbonate (Li₂CO₃), lithium sulfate (Li₂SO₄), lithium oxide (Li₂O), and lithium hydroxide (LiOH), and metallic lithium. From the viewpoint of ease of handling, lithium sulfide is preferably used.

On the other hand, since lithium sulfide is expensive, it is preferable to use a lithium compound other than lithium sulfide, metallic lithium, or the like from the viewpoint of reducing a production cost of the sulfide-based solid electrolyte. Specifically, in this case, the raw material preferably contains one or more selected from the group consisting of metallic lithium, lithium carbonate (Li₂CO₃), lithium sulfate (Li₂SO₄), lithium oxide (Li₂O), and lithium hydroxide (LiOH) as the Li-containing substance. These substances may be used alone or in combination of two or more kinds thereof.

Examples of the S-containing substances include phosphorus sulfides such as phosphorus trisulfide (P₂S₃) and phosphorus pentasulfide (P₂S₅), other sulfur compounds containing phosphorus, elemental sulfur, and a compound containing sulfur. Examples of the compound containing sulfur include H₂S, CS₂, iron sulfides (FeS, Fe₂S₃, FeS₂, Fe₁₋ₓS, or the like), bismuth sulfide (Bi₂S₃), and copper sulfides (CuS, Cu₂S, Cu₁₋ₓS, or the like). The S-containing substance is preferably phosphorus sulfide, and more preferably phosphorus pentasulfide (P₂S₅), from the viewpoint of preventing containing of elements other than the elements constituting the target sulfide-based solid electrolyte. These substances may be used alone or in combination of two or more kinds thereof. Phosphorus sulfide can be considered as a compound that serves as both the S-containing substance and the P-containing substance.

Examples of the P-containing substances include phosphorus sulfides such as phosphorus trisulfide (P₂S₃) and phosphorus pentasulfide (P₂S₅), phosphorus compounds such as sodium phosphate (Na₃PO₄), and elemental phosphorus. The P-containing substance is preferably phosphorus sulfide, and more preferably phosphorus pentasulfide (P₂S₅), from the viewpoint of preventing containing of elements other than the elements constituting the target sulfide-based solid electrolyte. These substances may be used alone or in combination of two or more kinds thereof.

In the present production method, the raw material can be obtained, for example, as a mixed raw material obtained by appropriately mixing the above substances in accordance with the intended composition of the sulfide-based solid electrolyte. A mixing ratio is not particularly limited, but for example, a molar ratio Li/P of Li to P in the raw material is preferably 65/35 or more, and more preferably 70/30 or more.

Examples of a preferred combination of the above compounds include a combination of Li₂S and P₂S₅. When Li₂S and P₂S₅ are combined, the molar ratio Li/P of Li to P is preferably from 65/35 to 88/12, and more preferably from 70/30 to 88/12. By adjusting the mixing ratio so that the amount of P₂S₅ is relatively smaller than Li₂S, it becomes easier to prevent elimination of sulfur and phosphorus components during heat treatment due to a smaller boiling point of P₂S₅ compared to a melting point of Li₂S.

The raw material in the present production method may contain further substances (compounds and the like) in addition to the above substances depending on the composition of the desired sulfide-based solid electrolyte or as additives or the like.

For example, when producing a sulfide-based solid electrolyte containing a halogen element such as F, Cl, Br or I, the raw material preferably contains a halogen element (Ha). In this case, the raw material preferably contains a compound containing a halogen element. Examples of the compound containing a halogen element include lithium halides such as lithium fluoride (LiF), lithium chloride (LiCl), lithium bromide (LiBr), and lithium iodide (LiI), phosphorus halides, phosphoryl halides, sulfur halides, sodium halides, and boron halides. As the compound containing a halogen element, lithium halides are preferable, and LiCl, LiBr, and LiI are more preferable, from the viewpoint of preventing containing of elements other than the elements constituting the target sulfide-based solid electrolyte. These compounds may be used alone or in combination of two or more kinds thereof.

The lithium halide may also be a Li-containing compound. When the raw material contains lithium halide, some or all of Li in the raw material may be derived from the lithium halide.

When the raw material contains a halogen element, a molar equivalent of Ha relative to P in the raw material is preferably 0.2 molar equivalents or more, and more preferably 0.5 molar equivalents or more, from the viewpoint of lowering a melting point when the raw material is heated and melted. From the viewpoint of improving stability of the resulting sulfide-based solid electrolyte, the molar equivalent of Ha is preferably 4 molar equivalents or less, and more preferably 3 molar equivalents or less.

From the viewpoint of improving a glass formation state of the resulting sulfide-based solid electrolyte, the raw material preferably contains sulfides such as SiS₂, B₂S₃, GeS₂, and Al₂S₃. By facilitating the glass formation, when glass is obtained by rapid cooling, glass can be obtained even when a cooling rate is reduced, thereby reducing a load on an apparatus. From the viewpoint of imparting moisture resistance to the sulfide-based solid electrolyte, it is also preferable that oxides such as SiO₂, B₂O₃, GeO₂, Al₂O₃, P₂O₅ are contained. These compounds may be used alone or in combination of two or more kinds thereof.

An addition amount of these compounds is preferably 0.1 weight% or more, and more preferably 0.5 weight% or more with respect to a total amount of the raw material. The addition amount is preferably 50 weight% or less, and more preferably 40 weight% or less.

As the raw material, the above-mentioned various substances can be used in combination. When a plurality of substances are combined as the raw material, the raw material may be mixed using, for example, a known mixer. As the mixer, for example, a V-type mixer, a W-type mixer, a ribbon-type mixer, or the like can be used.

In the present production method, the sulfide-based solid electrolyte is obtained by heating and melting the raw material, but the raw material may be subjected to a heat treatment in advance before the heating and melting. By undergoing the heat treatment, the raw material can be heated and melted from a state where the composition thereof is closer to a target composition, making it easier to control the composition. A part of the raw material may be subjected to the heat treatment and then mixed with the remaining raw material. The raw material after the heat treatment may contain a compound containing Li, P and S, such as Li₄P₂S₆ and Li₃PS₄. Conditions for the heat treatment are not particularly limited, but it is preferable to hold a temperature at 100°C to 500°C for 0.1 hour to 5 hours, for example.

### (Method for Producing Sulfide-based Solid Electrolyte)

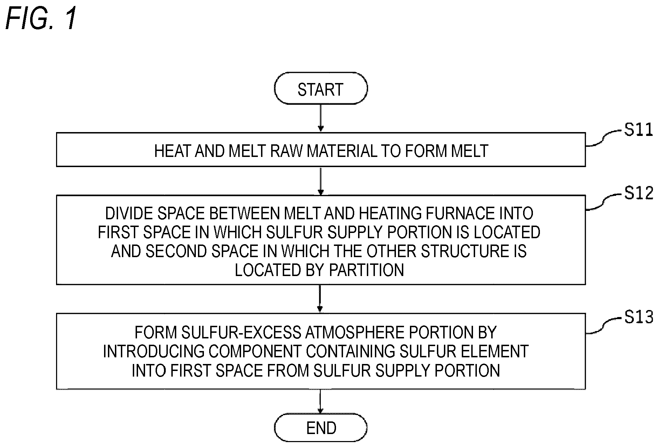

FIG. 1 is a flowchart illustrating an example of the present production method. For example, the present production method includes step S11 of heating and melting the raw material to form the melt, step S12 of dividing, by the partition, the space between the melt and the heating furnace into the first space in which the sulfur supply portion is located and the second space in which another structure is located, and step S13 of forming the sulfur-excess atmosphere portion by introducing the component containing the sulfur element into the first space from the sulfur supply portion. Steps S11 to S13 are not required to be performed in this order, and may be performed in parallel, for example.

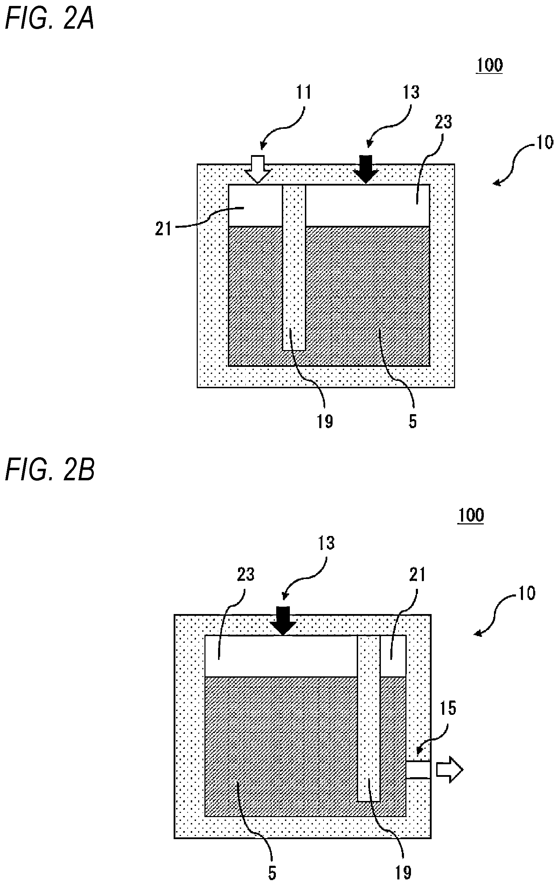

FIGS. 2A and 2B are diagrams schematically illustrating the present production method. FIG. 2A is a diagram illustrating the present production method in which a raw material charge portion is provided as another structure, and FIG. 2B is a diagram illustrating the present production method in which a sulfide-based solid electrolyte discharge portion is provided as another structure.

In FIGS. 2A and 2B, a production apparatus 100 includes at least a heating furnace 10. The heating furnace 10 includes a sulfur supply portion 13, a partition 19 provided inside the heating furnace 10, and the other structure capable of allowing an inside and an outside of the heating furnace 10 to communicate with each other. Here, in FIG. 2A, the heating furnace 10 includes a raw material charge portion 11 as the other structure. Further, in FIG. 2B, the heating furnace 10 includes a sulfide-based solid electrolyte discharge portion 15 as the other structure.

The present production method includes heating and melting the raw material in the heating furnace (heating and melting step). Specifically, in the heating and melting step, the melt is formed by heating and melting the raw material in the heating furnace (step S11).

In FIGS. 2A and 2B, the heating furnace 10 contains therein a melt 5 obtained by heating and melting the raw material. Further, the space between the melt 5 and the heating furnace 10 is divided by the partition 19 into the first space in which the sulfur supply portion 13 is located and the second space in which the other structure is located (step S12). A sulfur-excess atmosphere portion 23 is formed by introducing the component containing the sulfur element into the first space from the sulfur supply portion 13 (step S13).

For example, in FIG. 2A, the melt 5 is formed by heating and melting the raw material, and the space between the melt 5 and the heating furnace 10 is divided by the partition 19 into the first space in which the sulfur supply portion 13 is located and the second space in which the raw material charge portion 11 is located. Further, the sulfur-excess atmosphere portion 23 is formed by introducing the component containing the sulfur element into the first space.

For example, in FIG. 2B, the melt 5 is formed by heating and melting the raw material, and the space between the melt 5 and the heating furnace 10 is divided by the partition 19 into the first space in which the sulfur supply portion 13 is located and the second space in which the sulfide-based solid electrolyte discharge portion 15 is located. Further, the sulfur-excess atmosphere portion 23 is formed by introducing the component containing the sulfur element into the first space.

Here, the second space in which the other structure is located refers to the other structure and a gas atmosphere portion with which the other structure is in contact when the other structure is in contact with the gas atmosphere portion in the heating furnace as illustrated in FIG. 2A. That is, in FIG. 2A, the second space in which the raw material charge portion 11 is located is the raw material charge portion 11 and a gas atmosphere portion 21 in contact therewith.

On the other hand, as illustrated in FIG. 2B, when the other structure is in contact with the melt in the heating furnace, the other structure and the gas atmosphere portion with which the other structure first is in contact when an amount of melt in the heating furnace is reduced are defined as the second space in which the other structure is located. Specifically, in FIG. 2B, the second space in which the sulfide-based solid electrolyte discharge portion 15 is located is the sulfide-based solid electrolyte discharge portion 15 and the gas atmosphere portion 21 with which the sulfide-based solid electrolyte discharge portion 15 first is in contact when an amount of the melt 5 is reduced.

In this specification, the gas atmosphere portion refers to a gas atmosphere region partitioned by a melt, a partition, or the like in a heating furnace.

In general, in the heating furnace, a temperature tends to decrease in the vicinity of the other structure that allows the inside and the outside of the heating furnace to communicate with each other such as the raw material charge portion or the sulfide-based solid electrolyte discharge portion. More specifically, in the case of the raw material charge portion, since a melting point of P₂S₅ contained in the raw material is relatively low at 288°C, a charge port may become clogged due to liquefaction of P₂S₅ unless the temperature is lowered to a certain degree. When the melt is discharged from the sulfide-based solid electrolyte discharge portion, the discharged melt may be cooled and therefore tends to have a lower temperature than a furnace. In addition, even when the other structure is openable and closable and the member is in a closed state, a temperature of the other structure may easily decrease depending on an opening and closing control mechanism and a position thereof. For example, in a configuration in which the opening and closing control mechanism such as a valve is provided in the middle of a path connecting the inside and the outside of the heating furnace, it is considered that the temperature is likely to decrease in the vicinity of the other structure.

Further, the sulfur-excess atmosphere portion is formed of a gas containing a sulfur element. When the gas containing the sulfur element comes into contact with a location in the heating furnace which has a relatively low temperature, sulfur tends to liquefy or solidify at that location. That is, sulfur may adhere to the vicinity of the other structure. In particular, if the adhesion occurs when the other structure allows the inside and the outside of the heating furnace to communicate with each other, blockages may occur in the vicinity of the other structure. In addition, when the blockage causes an increase in internal pressure inside the furnace and a sulfur vapor leaks to the outside, there is a growing risk that sulfur will adhere to external piping and members, making it difficult to continue the production. Furthermore, when the blockage prevent a substance from being charged into the heating furnace or discharged from the heating furnace, a risk of continuous production becoming difficult increases.

In general, the higher the temperature, the higher the saturated vapor pressure of sulfur, and the higher the concentration of the sulfur gas. Therefore, in the present production method in which the heating and melting are carried out at a higher temperature than in a solid phase reaction, it is considered that the adhesion of sulfur is relatively likely to occur in the sulfur-excess atmosphere portion.

On the other hand, in the present production method, the space between the melt and the heating furnace is divided by the partition into the first space in which the sulfur supply portion is located and the second space in which the other structure is located, and the sulfur-excess atmosphere portion is formed in the first space. Accordingly, since the sulfur-excess atmosphere portion is partitioned off independently from the other structure, the adhesion of sulfur and the resulting blockage inside the apparatus can be prevented, making it easier to continue stable production and improving the productivity.

The other structure is not particularly limited as long as the member can allow the inside and the outside of the heating furnace to communicate with each other, and examples thereof include a member that transports a substance into the inside of the heating furnace, a member that discharges a substance from the inside of the heating furnace, and the like. More specifically, the other structure is preferably at least one of the raw material charge portion and the sulfide-based solid electrolyte discharge portion described above. The other structure may be an opening that always allows the inside and the outside of the heating furnace to communicate with each other, or may be an openable and closable member that allows the inside and the outside of the heating furnace to communicate with each other when controlled to an open state. In the other structure, a form of the opening and the opening and closing mechanism are not particularly limited and may be any known mechanism. For example, examples of the form of the other structure include a form in which an opening (passage) is provided in a wall of the heating furnace, or a form in which a pipe (nozzle) that can communicate with the outside of the heating furnace is provided inside the heating furnace.

The communication between the inside and the outside of the heating furnace through a member does not have to be intentionally controlled; for example, when a member such as a stirring blade, a thermocouple, and a pressure gauge is provided inside the heating furnace, and the gas inside the heating furnace inevitably leaks from a connection portion between the member and the heating furnace, the connection portion may be the other structure. The temperature may easily decrease in the vicinity of such a connection portion, and if sulfur adheres to the connection portion, operation of the member may be affected and the productivity may be reduced. Therefore, preventing the adhesion of sulfur to the vicinity of the connection portion can contribute to improving the productivity.

A minimum temperature of the second space in which the other structure is located is preferably 450°C or lower, more preferably 400°C or lower, and still more preferably 350°C or lower, from the viewpoint of suitably obtaining the effect of preventing the liquefaction or the solidification of sulfur. This means that the minimum temperature in the second space is equal to or lower than the boiling point of sulfur, which is 444°C. That is, in this case, since the conditions are such that the liquefaction and the solidification of sulfur are relatively likely to occur, the effects of the present invention can be more suitably obtained.

Here, the minimum temperature of the second space refers to a minimum temperature in a region into which the sulfur vapor can enter, assuming that there is no partition in the heating furnace. In many cases, this is the temperature of a location that is furthest from the furnace in the portion that can allow the outside and the inside to communicate with each other. A lower limit of the minimum temperature is not particularly limited, but a practical lower limit is, for example, about 100°C.

As described above, the other structure is a member that can allow the inside and the outside of the heating furnace to communicate with each other, but when the inside and the outside of the heating furnace communicate with each other by the other structure, that is, when the other structure is in an open state, the risk of a temperature decrease and the blockage due to the sulfur adhesion is more likely to increase. Accordingly, when the present production method further includes allowing the inside and the outside of the heating furnace to communicate with each other by at least one of the other structures in a state where the sulfur-excess atmosphere portion is provided in the heating furnace, the second space preferably includes the other structure that allows the inside and the outside of the heating furnace to communicate with each other.

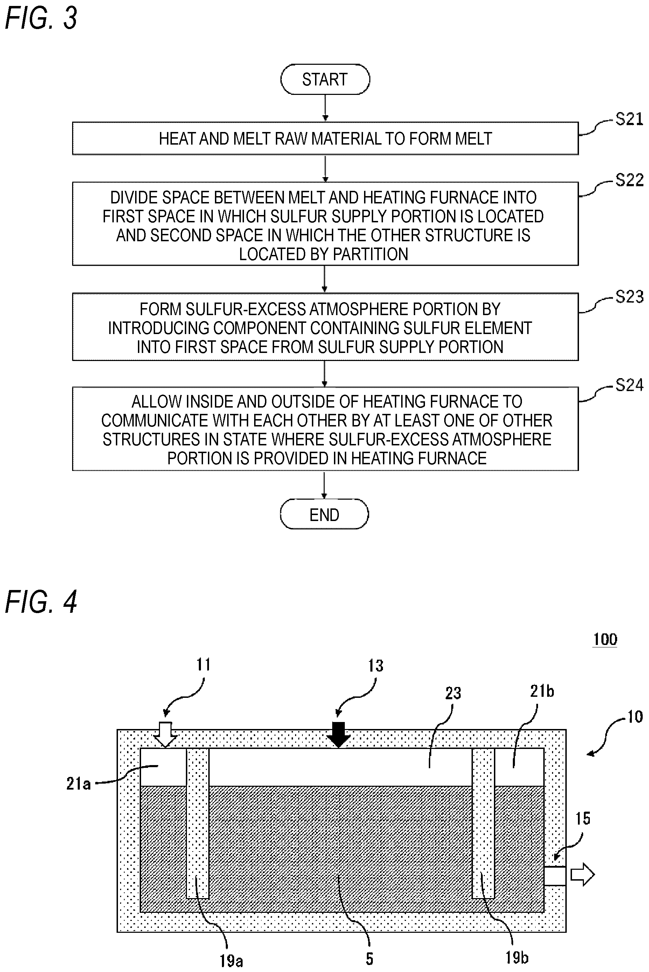

FIG. 3 is a flowchart illustrating the present production method further including allowing the inside and the outside of the heating furnace to communicate with each other by at least one of the other structures. The production method illustrated in FIG. 3 includes steps S21 to S23 corresponding to the above steps S11 to S13, and a step S24 of allowing the inside and the outside of the heating furnace to communicate with each other by at least one of the other structures in the state where the sulfur-excess atmosphere portion is provided in the heating furnace.

As illustrated below, the order of steps S21 to S24 is not particularly limited. For example, at least one of steps S21 to S23 and step S24 may be performed in parallel, step S24 may be performed a plurality of times during at least one of steps S21 to S23, or step S24 may be performed after steps S21 to S23.

For example, in FIG. 2A, when the raw material or the like is continuously fed into the heating furnace from the raw material charge portion in parallel with the heating and melting step, the raw material charge portion 11 is opened in a state where the sulfur-excess atmosphere portion 23 is provided in the heating furnace 10, and the inside and the outside of the heating furnace can communicate with each other. In this case, allowing the inside and the outside of the heating furnace to communicate with each other by the raw material charge portion corresponds to step S24 in FIG. 3. At this time, in the configuration of FIG. 2A, the space between the melt 5 and the heating furnace 10 is divided by the partition 19 into the first space in which the sulfur supply portion 13 is located, and the second space in which the raw material charge portion 11, which is the other structure that allows the inside and the outside of the heating furnace to communicate with each other, is located. That is, the second space includes the other structure that allows the inside and the outside of the heating furnace to communicate with each other.

In FIG. 2B, for example, when the melt 5 is discharged from the heating furnace after the heating and melting step, the sulfide-based solid electrolyte discharge portion 15 is opened in a state where the sulfur-excess atmosphere portion 23 and the melt 5 are provided in the heating furnace 10, and the inside and the outside of the heating furnace can communicate with each other. In this case, allowing the inside and the outside of the heating furnace to communicate with each other by the sulfide-based solid electrolyte discharge portion corresponds to step S24 in FIG. 3. At this time, the space between the melt 5 and the heating furnace 10 is divided by the partition 19 into the first space in which the sulfur supply portion 13 is located, and the second space in which the sulfide-based solid electrolyte discharge portion 15, which is the other structure that allows the inside and the outside of the heating furnace to communicate with each other, is located. That is, the second space includes the other structure that allows the inside and the outside of the heating furnace to communicate with each other.

Although FIGS. 2A and 2B illustrate examples in which the heating furnace includes at least one of the other structures, the heating furnace may include two or more other structures. In this case, a plurality of second spaces in which the other structures are located may exist. When the heating furnace include a plurality of other structures, the first space may be separated from the second space in which at least one of the other structures is located, and may be separated from all of the second spaces in which the other structures are located.

For example, FIG. 4 is a diagram schematically illustrating the present production method in a case where the heating furnace includes, as the other structures, the raw material charge portion and the sulfide-based solid electrolyte discharge portion, and the first space is separated from both partitioned regions respectively including the raw material charge portion and the sulfide-based solid electrolyte discharge portion. In FIG. 4, the production apparatus 100 includes at least the heating furnace 10. The heating furnace 10 includes the sulfur supply portion 13, partitions 19a and 19b provided inside the heating furnace, and other structures capable of causing the inside and the outside of the heating furnace into communication with each other. Here, in FIG. 4, the heating furnace 10 further includes the raw material charge portion 11 and the sulfide-based solid electrolyte discharge portion 15 as the other structures.

In FIG. 4, the space between the melt and the heating furnace is divided by the partition 19a into the first space in which the sulfur supply portion 13 is located and the second space in which the raw material charge portion 11 which is the other structure is located. Further, the space between the melt and the heating furnace is divided by the partition 19b into the first space in which the sulfur supply portion 13 is located and the second space in which the sulfide-based solid electrolyte discharge portion 15 which is the other structure is located.

Here, in FIG. 4, the second space in which the raw material charge portion 11 is located refers to the raw material charge portion 11 and a gas atmosphere portion 21a, and the second space in which the sulfide-based solid electrolyte discharge portion 15 is located refers to the sulfide-based solid electrolyte discharge portion 15 and a gas atmosphere portion 21b. Further, the sulfur-excess atmosphere portion 23 is formed in such a first space. Accordingly, in the form of FIG. 4, the sulfur-excess atmosphere portion 23 is separated from both the second space in which the raw material charge portion 11 is located and the second space in which the sulfide-based solid electrolyte discharge portion 15 is located.

For example, in the production method illustrated in FIG. 4, the heating and melting step can be continuously performed by charging the raw material from the raw material charge portion 11 in parallel with the heating and melting step and discharging the melt from the sulfide-based solid electrolyte discharge portion 15. At this time, both the raw material charge portion 11 and the sulfide-based solid electrolyte discharge portion 15 function as members that allows the inside and the outside of the heating furnace to communicate with each other in a state where the sulfur-excess atmosphere portion is provided inside the heating furnace. Therefore, by separating the sulfur-excess atmosphere portion from both the second spaces in which the raw material charge portion 11 and the sulfide-based solid electrolyte discharge portion 15 are respectively located, the adhesion of sulfur can be particularly effectively prevented in the case where the heating and melting step is continuously performed as described above.

Hereinafter, the present production method is described in detail.

### (Heating Furnace)

In the present production method, the heating furnace includes the sulfur supply portion, the partition provided inside the heating furnace, and one or more other structures capable of allowing the inside and the outside of the heating furnace to communicate with each other.

The sulfur supply portion is not particularly limited as long as the sulfur supply portion is a portion capable of introducing the component containing the sulfur element into the heating furnace, and may have a known configuration according to a method for introducing the component containing the sulfur element and the like.

The partition is provided inside the heating furnace. As long as the effects of the present invention can be obtained, a specific shape, a material, and the like thereof are not particularly limited. For example, the partition 19 in FIGS. 2A, 2B, and 4 is a plate-shaped member that divides the space between the melt and the heating furnace and that is provided so as to partition at least the gas atmosphere portion inside the heating furnace. The partition 19 in FIGS. 2A, 2B, and 4 is arranged parallel to a cross section of the heating furnace 10 taken along a vertical direction when the up-down direction of the paper surface is taken as the vertical direction.

When the melt is provided in the heating furnace, it is preferable that the partition and the melt define the gas atmosphere portion, while the melt is not completely separated, and is provided such that the front and the back of the partition are connected. Such a communication portion that allows the melt to communicate is preferably provided on a bottom side of the heating furnace. Accordingly, even when an amount of the melt is relatively small, the partition can easily maintain a state where the space between the melt and the heating furnace is divided. One partition may be provided in the heating furnace, or multiple partitions may be provided.

The other structure is a member that can allow the inside and the outside of the heating furnace to communicate with each other as described above. The members and the like specifically described as the other structures are as illustrated above.

A position of the opening in the heating furnace of the other structure is preferably above a lower end of the partition that is in contact with the second space in which the other structure is located. The up-down direction here refers to the up-down direction when the heating furnace is provided for use. For example, in FIG. 4, the opening in the heating furnace of the raw material charge portion 11 is located above a lower end of the partition 19a in contact with the second space in which the raw material charge portion 11 is located. Further, the opening in the heating furnace of the sulfide-based solid electrolyte discharge portion 15 is located above a lower end of the partition 19b in contact with the second space in which the sulfide-based solid electrolyte discharge portion 15 is located. Accordingly, even when the amount of the melt in the heating furnace is reduced by, for example, discharging the melt, a state where the first space and the second space are separated by the partition can be easily maintained. In addition, in the case where the present production method includes discharging the melt from the sulfide-based solid electrolyte discharge portion in a state where the sulfur-excess atmosphere portion is provided in the heating furnace, the discharge of the melt is easily stopped in a state where the separation of the first space (sulfur-excess atmosphere portion) is maintained, and the adhesion of sulfur in the sulfide-based solid electrolyte discharge portion can be more suitably prevented.

The opening in the heating furnace of the other structure refers to an opening on an inside of the heating furnace when the other structure allows the inside and the outside of the heating furnace to communicate with each other. When an opening (passage) such as the sulfide-based solid electrolyte discharge portion 15 in FIG. 2B and FIG. 4 is provided in the wall of the heating furnace, such an opening refers to the opening, and when a pipe (nozzle) capable of communicating with the outside of the heating furnace is provided inside the heating furnace, such an opening refers to the opening of the pipe on the inside of the heating furnace.

### (Heating and Melting Step)

In the heating and melting step, the raw material is heated and melted in the heating furnace. More specifically, in the heating and melting step, the melt is formed by heating and melting the raw material in the heating furnace. In addition, the raw material is heated and melted in the heating furnace, and the sulfur-excess atmosphere portion is formed in the first space, so that the raw material (melt) is heated and melted in contact with the sulfur-excess atmosphere portion.

A method of charging the raw material into the heating furnace is not particularly limited, and can be appropriately selected from known methods according to a desired production method or the like. Examples of the method of charging the raw material into the heating furnace include a method of putting the raw material into the heating furnace from the raw material charge portion described above. The raw material may be fed in a constant amount continuously or in a predetermined amount intermittently. Further, in order to prevent a gas in the heating furnace from flowing out from the raw material charge portion, an inert gas or the like may be introduced from the raw material charge portion. Examples of the inert gas include a nitrogen gas and an argon gas.

A heating temperature in the heating and melting step is preferably 600°C to 900°C. The heating temperature is preferably 600°C or higher, more preferably 650°C or higher, and still more preferably 700°C or higher. It is preferable that the heating temperature is equal to or higher than the above value so that the raw material can be easily melted at this temperature. The heating temperature is preferably 900°C or lower, more preferably 850°C or lower, and still more preferably 800°C or lower. It is preferable that the heating temperature is equal to or lower than the above value so that an amount of components eliminated from the raw material during the heating and melting is unlikely to become excessive.

A method for heating the heating furnace is not particularly limited, and may be a known heating method using an external heating device or the like.

The heating and melting time is preferably 0.1 hours or more, more preferably 0.5 hours or more, still more preferably 0.7 hours or more, and even more preferably 1 hour or more from the viewpoint of improving homogeneity of the melt and the obtained sulfide-based solid electrolyte. As long as the deterioration or decomposition of the components in the melt due to heating is within an acceptable range, there is no particular upper limit to the heating and melting time, and the time may be relatively long. As a practical range, 100 hours or less is preferable, 50 hours or less is more preferable, and 24 hours or less is still more preferable. As described above, the heating and melting may be performed continuously or in a batch manner.

A pressure during the heating and melting is not particularly limited, but a normal pressure or a slight pressure is preferred, and a normal pressure is more preferred.

### (Sulfur-excess Atmosphere Portion)

The sulfur-excess atmosphere portion is formed by introducing the component containing the sulfur element from the sulfur supply portion into the first space. The sulfur-excess atmosphere portion is a gas atmosphere portion that is formed of a gas atmosphere containing a sulfur element. The raw material (melt) is heated and melted in contact with the sulfur-excess atmosphere portion, so that volatilization of a sulfur component into the gas atmosphere containing the sulfur element, which has a relatively high sulfur partial pressure, can be prevented. Accordingly, the composition of the obtained sulfide-based solid electrolyte is easier to control.

As a method for forming the sulfur-excess atmosphere portion, as described above, the component containing the sulfur element is introduced from the sulfur supply portion into the first space in the heating furnace, and more specifically, at least one of introducing the gas containing the sulfur element into the first space and introducing a solid containing a sulfur element can be described. A timing for introducing the component containing the sulfur element into the heating furnace may be after the raw material has been placed in the heating furnace in advance and heated to obtain a melt, or may be at the same time as the raw material is placed in the heating furnace, as long as the effects of the present invention are not hindered. From the viewpoint of preventing the adhesion of sulfur to the raw material charge portion, it is more preferable to introduce the component containing the sulfur element after the melt is obtained by heating.

Examples of a method for introducing the gas containing the sulfur element include a method for introducing, into the first space, a gas containing a sulfur element prepared in advance outside the heating furnace. The method for preparing the gas containing the sulfur element outside the heating furnace is not particularly limited. For example, it is preferable to heat a sulfur source outside the heating furnace to obtain a gas containing a sulfur element.

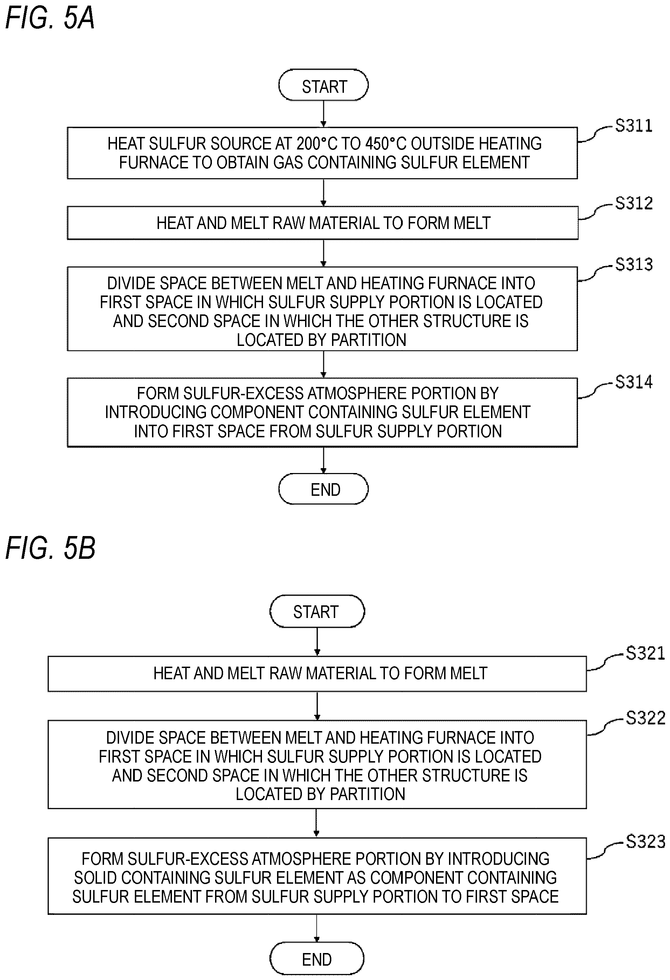

FIG. 5A is a flowchart illustrating this method. The production method illustrated in FIG. 5A includes step S311 of heating a sulfur source at 200°C to 450°C outside the heating furnace to obtain a gas containing a sulfur element, and steps S312 to S314 corresponding to the above-mentioned steps S11 to S13. The order of steps S311 to S314 is not particularly limited. For example, step S311 may be performed prior to steps S312 to S314, or may be performed in parallel with steps S312 to S314.

The sulfur source is not particularly limited as long as it is elemental sulfur or a sulfur compound from which the gas containing the sulfur element can be obtained by heating, and examples thereof include elemental sulfur, organic sulfur compounds such as hydrogen sulfide and carbon disulfide, iron sulfides (such as FeS, Fe₂S₃, FeS₂, and Fe₁₋ₓS), bismuth sulfide (Bi₂S₃), copper sulfides (such as CuS, Cu₂S, and Cu₁₋ₓS), polysulfides such as lithium polysulfide and sodium polysulfide, polysulfides, and rubber subjected to a sulfur vulcanization treatment.

For example, these sulfur sources are heated in a sulfur source heating portion that is separately provided to generate the gas containing the sulfur element, and the gas is transported to the heating portion using an inert gas such as a N₂ gas, an argon gas, and a helium gas as a carrier gas to form the sulfur-excess atmosphere portion.

The temperature at which the sulfur source is heated can be appropriately selected depending on the type of the used sulfur source. For example, the temperature at which the sulfur source is heated is preferably 200°C to 450°C, and more preferably 300°C to 400°C.

Alternatively, the sulfur-excess atmosphere portion may be formed by introducing the solid containing the sulfur element into the first space. In this case, the gas containing the sulfur element is obtained by heating the solid containing the sulfur element in the heating furnace, and the sulfur-excess atmosphere portion can be formed. FIG. 5B is a flowchart illustrating this method. The production method illustrated in FIG. 5B includes steps S321 and S322 corresponding to the above-mentioned steps S11 and S12, and a step S323 of forming the sulfur-excess atmosphere portion by introducing the solid containing the sulfur element as the component containing the sulfur element from the sulfur supply portion to the first space.

Examples of the solid containing the sulfur element include solid sulfur sources such as elemental sulfur, H₂S, Bi₂S₃, iron sulfides, copper sulfides, and CS₂. For example, such a solid sulfur source is pneumatically transported in a fine state such as a powder to the heating portion by a carrier gas, so that the solid containing the sulfur element is introduced into the heating furnace. The method for introducing the component containing the sulfur element into the heating furnace may be a combination of FIGS. 5A and 5B. For example, step S314 in FIG. 5A may be changed to step S323 in FIG. 5B.

In the sulfur-excess atmosphere portion, the sulfur partial pressure is preferably set to 10⁻³ atm to 10⁰ atm. By setting such a sulfur partial pressure in this range, sulfur can be introduced efficiently at a low cost without complicating the apparatus.

### (Gas Atmosphere Portion)

In the heating furnace, a moisture dew point of the gas atmosphere portion separated from the first space is preferably lower than -30°C, more preferably -40°C or lower, and still more preferably -50°C or lower. This prevents moisture present in the gas atmosphere portion from reacting with the raw material or the melt and affecting the composition of the obtained sulfide-based solid electrolyte. A lower limit of the moisture dew point of the gas atmosphere portion is not particularly limited, but is, for example, about -80°C.

In the heating furnace, an oxygen concentration in the gas atmosphere portion separated from the first space is preferably less than 100 ppm, more preferably less than 50 ppm, and still more preferably less than 10 ppm. This prevents oxygen present in the gas atmosphere portion from reacting with the raw material or the melt and affecting the composition of the obtained sulfide-based solid electrolyte. A lower limit of the oxygen concentration in the gas atmosphere portion is not particularly limited, but is, for example, about 0.01 ppm.

### (Cooling Step)

The present production method preferably further includes a step of cooling the melt obtained by heating and melting to obtain a solid. The cooling may be performed by a known method, and the method is not particularly limited. After the heating and melting step, the cooling may be continued in the heating furnace, or the melt may be removed from the heating furnace and then cooled. When the melt is removed from the heating furnace and cooled, for example, the melt is discharged from the sulfide-based solid electrolyte discharge portion described above.

Examples of a more specific cooling method include a method in which the melt is poured onto a plate-like body made of carbon or the like and then cooled, and a method in which the melt is poured into a narrow gap to be formed into a thin shape. When the melt is poured onto a plate-like body and then cooled, it is preferable that a thickness of the melt after being poured and a thickness of the resulting solid are relatively thin, from the viewpoint of improving the cooling efficiency. Specifically, the thickness is preferably 10 mm or less, and more preferably 5 mm or less. A lower limit of the thickness is not particularly limited, but may be 0.01 mm or more, or may be 0.02 mm or more. When the melt is poured into a narrow gap to be formed into a thin shape, the cooling efficiency is excellent, and a solid in a flake form, fiber form, or powder form can be obtained. The obtained solid can be obtained in any shape by being crushed into pieces of a size that is easy to handle. Among these shapes, a solid in a shape of a block is preferred since it is easier to recover. The "block" also includes a plate-like, flake-like, and fiber-like shapes.

A cooling rate is preferably 0.01°C/sec or more, more preferably 0.05°C/sec or more, and still more preferably 0.1°C/sec or more, from the viewpoint of maintaining the composition obtained by the heating and melting step. An upper limit value of the cooling rate is not particularly determined, and a cooling rate of a twin-roller, whose rapid cooling rate is generally said to be the highest, is 1,000,000°C/sec or less.

Here, in the case where the obtained solid is desired to be an amorphous sulfide-based solid electrolyte, it is preferable to obtain a solid by rapidly cooling the melt obtained by heating and melting. Specifically, the cooling rate in the case of rapid cooling is preferably 10°C/sec or more, more preferably 100°C/sec or more, still more preferably 500°C/sec or more, and even more preferably 700°C/sec or more. An upper limit value of the cooling rate is not particularly limited, and a cooling rate of a twin-roller, whose rapid cooling rate is generally said to be the highest, is 1,000,000°C/sec or less.

On the other hand, it is also possible to obtain a sulfide-based solid electrolyte having a specific crystal structure or a sulfide-based solid electrolyte constituted by a crystal phase and an amorphous phase by performing a slow cooling in the cooling step to crystallize at least a part of the solid. The cooling rate in the case of the slow cooling is preferably 0.01°C/sec or more, and more preferably 0.05°C/sec or more. The cooling rate is preferably 500°C/sec or less, and more preferably 450°C/sec or less. The cooling rate may be less than 10°C/sec, or may be 5°C/sec or less. The cooling rate may be appropriately adjusted according to crystallization conditions.

Here, crystals contained in the sulfide-based solid electrolyte are preferably ion-conductive crystals. Specifically, the ion-conductive crystals are crystals having a lithium-ion conductivity of more than 10⁻⁴ S/cm, and more preferably more than 10⁻³ S/cm.

When it is desired that the solid obtained after cooling is a sulfide-based solid electrolyte containing a crystal phase, it is preferable that the melt obtained in the heating and melting step contains a compound that serves as a crystal nucleus. In this way, it is easier for crystals to precipitate in the cooling step. A method for containing a compound that serves as a crystal nucleus in the melt is not particularly limited, but examples thereof include a method of adding a compound that serves as a crystal nucleus to the raw material or a heated raw material, and a method of adding a compound that serves as a crystal nucleus to the melt during heating and melting.

Examples of the compound that serves as a crystal nucleus include oxides, oxynitrides, nitrides, carbides, other chalcogen compounds, and halides. The compound that serves as a crystal nucleus is preferably a compound having a certain degree of compatibility with the melt. A compound that is completely incompatible with the melt cannot serve as a crystal nucleus.

When it is desired that the solid obtained after cooling is a sulfide-based solid electrolyte containing a crystal phase, a content of the compound that serves as a crystal nucleus in the melt is preferably 0.01 mass% or more, more preferably 0.1 mass% or more, and still more preferably 1 mass% or more. On the other hand, from the viewpoint of preventing a decrease in the lithium-ion conductivity, the content of the compound that serves as a crystal nucleus in the melt is preferably 20 mass% or less, and more preferably 10 mass% or less.

If it is desired that the solid obtained after cooling is an amorphous sulfide-based solid electrolyte, it is preferable that the melt does not contain any compound that serves as a crystal nucleus, or that a content of the compound is a predetermined amount or less. Specifically, the content of the compound that serves as a crystal nucleus in the melt is preferably 1 mass% or less, and more preferably 0.1 mass% or less. The content of the compound that serves as a crystal nucleus in the melt may be less than 0.01 mass%.

The present production method may further include a step of subjecting the sulfide-based solid electrolyte obtained by cooling the melt to a known post-treatment or the like. Examples of the post-treatment step include a step of further heat treating the sulfide-based solid electrolyte from the viewpoint of obtaining desired characteristics, and a step of pulverizing the sulfide-based solid electrolyte from the viewpoint of obtaining a desired shape.

The present production method is excellent in productivity of the sulfide-based solid electrolyte since the adhesion of sulfur to the inside of the apparatus and the like is prevented. The sulfide-based solid electrolyte obtained by the present production method is suitably used as a solid electrolyte material for use in, for example, lithium-ion secondary batteries.

### <Apparatus for Producing Sulfide-based Solid Electrolyte>

An apparatus for producing a sulfide-based solid electrolyte according to the present embodiment (hereinafter, also referred to as the present production apparatus) is an apparatus for producing a sulfide-based solid electrolyte including a heating furnace configured to heat and melt a raw material, in which the heating furnace includes a sulfur supply portion, a partition provided inside the heating furnace, and one or more other structures capable of allowing an inside and an outside of the heating furnace to communicate with each other, the partition divides a space between a melt formed by heating and melting the raw material in the heating furnace and the heating furnace into a first space in which the sulfur supply portion is located and a second space in which the other structure is located, and the sulfur supply portion forms a sulfur-excess atmosphere portion by introducing a component containing a sulfur element into the first space.

The present production apparatus can be used for performing the present production method described above, and the contents described in the section <Method for Producing Sulfide-based Solid Electrolyte> can be directly applied thereto.

### EXAMPLES

Hereinafter, the present invention is described in detail with reference to Examples, but the present invention is not limited thereto. Examples 1 to 3 are Invention Examples.

### (Example 1)

A sulfide-based solid electrolyte is produced using a heating furnace having a configuration illustrated in FIG. 2A. First, a mixed raw material corresponding to a composition of a desired sulfide-based solid electrolyte is prepared. Next, the mixed raw material is charged from the raw material charge portion 11 of the heating furnace 10 and heated and melted to form a melt. A heating temperature is 700°C, and a heating source provided outside the heating furnace is used. Accordingly, the space between the melt 5 and the heating furnace 10 is divided by the partition 19 into the first space in which the sulfur supply portion 13 is located and the second space in which the raw material charge portion 11 is located. Further, a sulfur solid is charged into the first space from the sulfur supply portion 13 in the heating furnace 10 to form the sulfur-excess atmosphere portion 23. The heating is continued for 30 minutes in this state. Accordingly, the raw material (melt) is in contact with the sulfur-excess atmosphere portion 23 and is heated and melted. After the heating, the melt 5 is continuously cooled and solidified in the heating furnace 10 to obtain a sulfide-based solid electrolyte.

### (Example 2)

A sulfide-based solid electrolyte is produced using a heating furnace having a configuration illustrated in FIG. 2A. First, a mixed raw material corresponding to a composition of a desired sulfide-based solid electrolyte is prepared. Next, the mixed raw material is charged from the raw material charge portion 11 of the heating furnace 10 and heated and melted to form a melt. A heating temperature is 700°C, and a heating source provided outside the heating furnace is used. Accordingly, the space between the melt 5 and the heating furnace 10 is divided by the partition 19 into the first space in which the sulfur supply portion 13 is located and the second space in which the raw material charge portion 11 is located. Further, outside the heating furnace, elemental sulfur is heated at 350°C as a sulfur source to obtain a sulfur vapor. Further, a gas containing a sulfur vapor is introduced into the first space from the sulfur supply portion 13 in the heating furnace 10 to form the sulfur-excess atmosphere portion 23. The heating is continued for 30 minutes in this state. Accordingly, the raw material (melt) is in contact with the sulfur-excess atmosphere portion 23 and is heated and melted. After the heating, the melt is continuously cooled and solidified in the heating furnace 10 to obtain a sulfide-based solid electrolyte.

### (Example 3)

A sulfide-based solid electrolyte is produced using a heating furnace having a configuration illustrated in FIG. 2B. First, a mixed raw material corresponding to a composition of a desired sulfide-based solid electrolyte is prepared. Next, the mixed raw material is charged from a raw material charge portion (not shown) of the heating furnace 10 and heated and melted to form a melt. A heating temperature is 700°C, and a heating source provided outside the heating furnace is used. Accordingly, the space between the melt 5 and the heating furnace 10 is divided by the partition 19 into the first space in which the sulfur supply portion 13 is located and the second space in which the sulfide-based solid electrolyte discharge portion 15 is located. Next, a sulfur solid is charged into the first space from the sulfur supply portion 13 in the heating furnace 10 to form the sulfur-excess atmosphere portion 23. The heating is continued for 30 minutes in this state. Accordingly, the raw material (melt) is in contact with the sulfur-excess atmosphere portion 23 and is heated and melted. After the heating, the melt 5 is discharged from the sulfide-based solid electrolyte discharge portion 15 and cooled and solidified by a twin-roller to obtain a sulfide-based solid electrolyte.

As described above, in all of Examples 1 to 3, the space between the melt and the heating furnace is divided by the partition into the first space in which the sulfur supply portion is located and the second space in which the other structure is located. Accordingly, since the sulfur-excess atmosphere portion is partitioned independently from other structures, in all of Examples 1 to 3, adhesion of sulfur to the inside of the apparatus is prevented, and productivity can be improved.

As described above, the following configurations are disclosed in the present description.
1. A method for producing a sulfide-based solid electrolyte, the method including heating and melting a raw material in a heating furnace,
   in which the heating furnace includes a sulfur supply portion, a partition provided inside the heating furnace, and one or more other structures capable of allowing an inside and an outside of the heating furnace to communicate with each other, and
   the method includes:
      forming a melt by heating and melting the raw material;
      dividing a space between the melt and the heating furnace by the partition into a first space in which the sulfur supply portion is located and a second space in which the other structure is located; and
      forming a sulfur-excess atmosphere portion by introducing a component containing a sulfur element into the first space from the sulfur supply portion.
2. The method for producing a sulfide-based solid electrolyte according to the 1, in which the other structure is at least one of a raw material charge portion and a sulfide-based solid electrolyte discharge portion.
3. The method for producing a sulfide-based solid electrolyte according to the 1 or 2, in which a minimum temperature of the second space is 450°C or lower.
4. The method for producing a sulfide-based solid electrolyte according to any one of the 1 to 3, the method further including allowing the inside and the outside of the heating furnace to communicate with each other by at least one of the other structures in a state where the sulfur-excess atmosphere portion is provided in the heating furnace,
   in which the second space includes the other structure that allows the inside and the outside of the heating furnace to communicate with each other.
5. The method for producing a sulfide-based solid electrolyte according to any one of the 1 to 4, the method further including heating a sulfur source at 200°C to 450°C outside the heating furnace to obtain a gas containing a sulfur element,
   in which the gas containing the sulfur element is introduced from the sulfur supply portion as the component containing the sulfur element.
6. The method for producing a sulfide-based solid electrolyte according to any one of the 1 or 5, in which a solid containing a sulfur element is introduced from the sulfur supply portion as the component containing the sulfur element.
7. The method for producing a sulfide-based solid electrolyte according to any one of the 1 to 6, in which a heating temperature in the heating and melting is 600°C to 900°C.
8. The method for producing a sulfide-based solid electrolyte according to any one of the 1 to 7, in which a moisture dew point of a gas atmosphere portion separated from the first space is lower than -30°C in the heating furnace.
9. The method for producing a sulfide-based solid electrolyte according to any one of the 1 to 8, in which an oxygen concentration of a gas atmosphere portion separated from the first space is less than 100 ppm in the heating furnace.
10. An apparatus for producing a sulfide-based solid electrolyte, the apparatus including a heating furnace configured to heat and melt a raw material,
   in which the heating furnace includes a sulfur supply portion, a partition provided inside the heating furnace, and one or more other structures capable of allowing an inside and an outside of the heating furnace to communicate with each other,
   the partition divides a space between a melt formed by heating and melting the raw material in the heating furnace and the heating furnace into a first space in which the sulfur supply portion is located and a second space in which the other structure is located, and
   the sulfur supply portion forms a sulfur-excess atmosphere portion by introducing a component containing a sulfur element into the first space.
11. The apparatus for producing a sulfide-based solid electrolyte according to the 10, in which the other structure is at least one of a raw material charge portion and a sulfide-based solid electrolyte discharge portion.

Although various embodiments have been described above with reference to the drawings, it is needless to say that the present invention is not limited to such examples. It is obvious for a person skilled in the art that various modifications and variations can be made within the category described in the scope of claims and it is understood that such modifications and variations naturally belong to the technical scope of the present invention. Further, the components described in the above embodiment may be combined in any manner without departing from the spirit of the invention.

The present application is based on a Japanese Patent Application (No. 2022-081848) filed on May 18, 2022, contents of which are incorporated herein by reference.

### REFERENCE SIGNS LIST

100 production apparatus
10 heating furnace
11 raw material charge portion
13 sulfur supply portion
15 sulfide-based solid electrolyte discharge portion
19, 19a, 19b partition
21, 21a, 21b gas atmosphere portion
23 sulfur-excess atmosphere portion
5 melt

## Claims

1. A method for producing a sulfide-based solid electrolyte, the method comprising heating and melting a raw material in a heating furnace,
wherein the heating furnace comprises a sulfur supply portion, a partition provided inside the heating furnace, and one or more other structures capable of allowing an inside and an outside of the heating furnace to communicate with each other, and
the method comprises:
forming a melt by heating and melting the raw material;
dividing a space between the melt and the heating furnace by the partition into a first space in which the sulfur supply portion is located and a second space in which the other structure is located; and
forming a sulfur-excess atmosphere portion by introducing a component containing a sulfur element into the first space from the sulfur supply portion.

2. The method for producing a sulfide-based solid electrolyte according to claim 1, wherein the other structure is at least one of a raw material charge portion and a sulfide-based solid electrolyte discharge portion.

3. The method for producing a sulfide-based solid electrolyte according to claim 1 or 2, wherein a minimum temperature of the second space is 450°C or lower.

4. The method for producing a sulfide-based solid electrolyte according to claim 1 or 2, the method further comprising allowing the inside and the outside of the heating furnace to communicate with each other by at least one of the other structures in a state where the sulfur-excess atmosphere portion is provided in the heating furnace,
wherein the second space comprises the other structure that allows the inside and the outside of the heating furnace to communicate with each other.

5. The method for producing a sulfide-based solid electrolyte according to claim 1 or 2, the method further comprising heating a sulfur source at 200°C to 450°C outside the heating furnace to obtain a gas containing a sulfur element,
wherein the gas containing the sulfur element is introduced from the sulfur supply portion as the component containing the sulfur element.

6. The method for producing a sulfide-based solid electrolyte according to claim 1 or 2, wherein a solid containing a sulfur element is introduced from the sulfur supply portion as the component containing the sulfur element.

7. The method for producing a sulfide-based solid electrolyte according to claim 1 or 2, wherein a heating temperature in the heating and melting is 600°C to 900°C.

8. The method for producing a sulfide-based solid electrolyte according to claim 1 or 2, wherein a moisture dew point of a gas atmosphere portion separated from the first space is lower than -30°C in the heating furnace.

9. The method for producing a sulfide-based solid electrolyte according to claim 1 or 2, wherein an oxygen concentration of a gas atmosphere portion separated from the first space is less than 100 ppm in the heating furnace.

10. An apparatus for producing a sulfide-based solid electrolyte, the apparatus comprising a heating furnace configured to heat and melt a raw material,
wherein the heating furnace comprises a sulfur supply portion, a partition provided inside the heating furnace, and one or more other structures capable of allowing an inside and an outside of the heating furnace to communicate with each other,
the partition divides a space between a melt formed by heating and melting the raw material in the heating furnace and the heating furnace into a first space in which the sulfur supply portion is located and a second space in which the other structure is located, and
the sulfur supply portion forms a sulfur-excess atmosphere portion by introducing a component containing a sulfur element into the first space.

11. The apparatus for producing a sulfide-based solid electrolyte according to claim 10, wherein the other structure is at least one of a raw material charge portion and a sulfide-based solid electrolyte discharge portion.
